# DEMANDE DE BREVET EUROPEEN

(11) **EP 3 018 926 A1**
(43) Date de publication de la demande: **11.05.2016**
(21) Numéro de dépôt: 15192633.4
(22) Date de dépôt: 02.11.2015
(51) Int. Cl.: H04W 12/04, H04W 12/06, H04W 84/18, H04M 1/725, H04W 4/00, H04W 8/00

(54) **SYSTEME DE COMMUNICATION EQUIPE D'UNE BALISE RADIO**

(30) Priorité: 05.11.2014 FR 1460698
(71) Demandeur: JCDecaux SA, 92200 Neuilly-Sur-Seine (FR)
(72) Inventeur: PENOT, Eric, 78230 LE PECQ (FR)
(74) Mandataire: Cabinet Plasseraud

(57) **Abrégé**

Système de communication (10) comprenant :
- une balise radio (14) adaptée pour envoyer des messages d'identification à un dispositif électronique personnel (12) d'un utilisateur ; et
- une unité de contrôle (16) adaptée pour commander la balise radio et modifier à des intervalles de temps prédéterminés, les messages d'identification envoyés par la balise radio.

## Description

### DOMAINE DE L'INVENTION

La présente invention concerne les systèmes de communication.

Plus particulièrement, l'invention concerne un système de communication entre une balise radio et un dispositif électronique personnel d'un utilisateur.

### ARRIERE-PLAN DE L'INVENTION

De tels systèmes de communication sont connus et servent notamment à transmettre à l'utilisateur des données de natures diverses.

### OBJETS DE L'INVENTION

La présente invention a pour but d'améliorer de tels systèmes de communication, en particulier pour accroître leur sécurité.

A cet effet, un système de communication du genre en question est caractérisé en ce qu'il comprend :
- une balise radio adaptée pour envoyer des messages d'identification à un dispositif électronique personnel d'un utilisateur ; et
- une unité de contrôle adaptée pour commander la balise radio et modifier à des intervalles de temps prédéterminés, les messages d'identification envoyés par la balise radio.

Grâce à ces dispositions, les messages d'identification sont modifiés de manière dynamique et ne sont utilisables qu'avec autorisation, améliorant de ce fait la sécurité du système.

Dans divers modes de réalisation du système de communication selon l'invention, on peut éventuellement avoir recours en outre à l'une et/ou à l'autre des dispositions suivantes :
- l'unité de contrôle est adaptée pour modifier toutes les 24h, les messages d'identification envoyés par la balise radio ;
- le système de communication comprend en outre un serveur central adapté pour communiquer avec le dispositif électronique personnel pour identifier les messages d'identification envoyés par la balise radio et reçus par le dispositif électronique personnel ;
- le serveur central est adapté pour communiquer avec le dispositif électronique personnel toutes les 24h ;
- la balise radio est adaptée pour envoyer les messages d'identification de sa propre initiative ;
- la balise radio est une balise Bluetooth basse consommation ; et
- la balise radio présente une portée inférieure ou égale à 60 m.

L'invention a également pour objet un procédé de communication, caractérisé en ce qu'il comprend les étapes suivantes :
- fournir un système de communication tel que décrit précédemment et un dispositif électronique personnel d'un utilisateur ;
- envoyer des messages d'identification au dispositif électronique personnel ; et
- modifier à des intervalles de temps prédéterminés, les messages d'identification envoyés par la balise radio.

Dans divers modes de réalisation du procédé selon l'invention, on peut éventuellement avoir recours à l'une et/ou à l'autre des dispositions suivantes :
- on modifie toutes les 24h, les messages d'identification envoyés par la balise radio ;
- on communique les messages d'identification au dispositif électronique personnel pour identifier lesdits messages d'identification après que lesdits messages d'identification ont été reçus par le dispositif électronique personnel ;
- on communique les messages d'identification au dispositif électronique personnel toutes les 24h ;
- les messages d'identification sont communiqués par une interface de programmation d'un serveur central à au moins une application installée sur le dispositif électronique personnel ;
- la communication des messages d'identification est sécurisée par un identifiant et un mot de passe ;
- le procédé comprend en outre une étape de notification au cours de laquelle, après qu'un message d'identification a été reçu par le dispositif électronique personnel et identifié, on notifie au dispositif électronique personnel des données relatives à la balise radio ; et
- le dispositif électronique personnel est choisi parmi un smartphone, un smartpad, une smartwatch et un assistant numérique personnel.

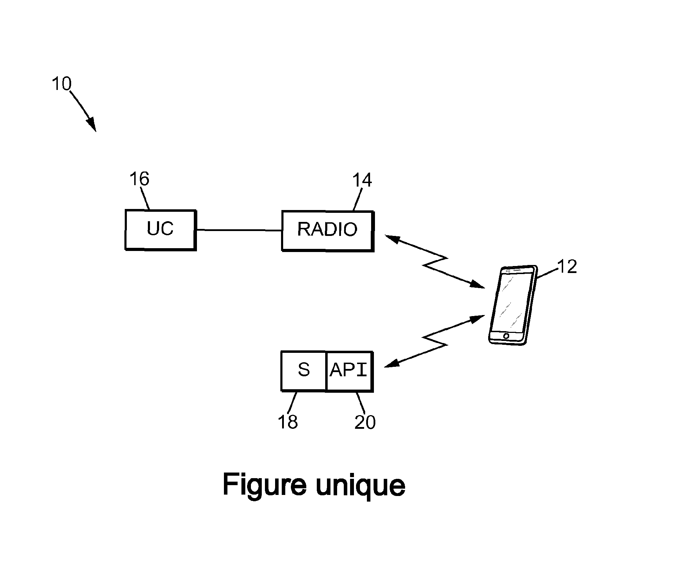

### BREVE DESCRIPTION DU DESSIN

L'invention sera mieux comprise à la lecture de la description qui va suivre d'un de ses modes de réalisation, donné uniquement à titre d'exemple non limitatif en se référant à la Figure unique annexée qui est un schéma bloc illustrant les composants électriques principaux d'un système de communication selon l'invention.

### DESCRIPTION PLUS DETAILLEE

La Figure unique illustre un système de communication 10 adapté pour communiquer avec un dispositif électronique personnel 12 d'un utilisateur, par exemple un smartphone, un smartpad ou tablette, une smartwatch ou montre connectée, un assistant numérique personnel ou PDA, etc.

Dans le mode de réalisation décrit ici, le dispositif électronique personnel 12 est un smartphone.

Le système de communication 10 comprend une balise radio 14 (RADIO) et une unité de contrôle 16 (UC).

La balise radio 14 est adaptée pour envoyer au smartphone 12 des messages d'identification.

En particulier, la balise radio 14 est adaptée pour envoyer les messages d'identification de sa propre initiative.

L'envoi des messages d'identification peut par exemple s'effectuer de manière continue ou à intervalles réguliers.

La balise radio 14 est de préférence un Beacon.

Avantageusement, la balise radio 14 est de préférence une balise Bluetooth basse consommation (BLE pour Bluetooth Low Energy).

La balise radio 14 est de préférence une balise moyenne portée et peut présenter par exemple une portée inférieure ou égale à 60 m.

L'unité de contrôle 16 est adaptée pour commander la balise radio 14.

En particulier, l'unité de contrôle 16 est adaptée pour commander la balise radio 14 et modifier les messages d'identification envoyés par la balise radio 14 à des intervalles de temps prédéterminés.

Par exemple, l'unité de contrôle 16 peut être adaptée pour modifier les messages d'identification envoyés par la balise radio 14 toutes les 24h.

En variante, l'unité de contrôle 16 peut être adaptée pour modifier les messages d'identification envoyés par la balise radio 14 toutes les heures, toutes les minutes, etc.

L'unité de contrôle 16 est par exemple un microprocesseur, microcontrôleur ou autre.

Afin que le smartphone 12 puisse identifier les messages d'identification qu'il reçoit de la balise radio 14, le système de communication 10 comprend en outre un serveur central 18 (S) adapté pour communiquer au smartphone 12 les messages d'identification destinés à être envoyés par la balise radio 14.

La communication des messages d'identification entre le smartphone 12 et le serveur central 18 est mise en oeuvre par l'intermédiaire d'applications installées sur le smartphone 12 et d'une interface de programmation 20 (API) du serveur central 18.

Cette communication est sécurisée par un identifiant et un mot de passe propres à chaque application.

Ainsi, l'interface de programmation 20 expose depuis le serveur central 18 un service utilisable sur identifiant et mot de passe par les applications installées sur le smartphone 12 pour reconnaître les messages d'identification envoyés par la balise radio 14 et reçus par le smartphone 12.

Avantageusement, si les messages d'identification sont modifiés toutes les 24h, la communication entre le serveur central 18 et le smartphone 12 a lieu également toutes les 24h.

Avantageusement, cette communication a lieu préalablement à l'envoi des messages d'identification par la balise radio 14.

Avantageusement, cette communication a lieu simultanément à la modification des messages d'identification.

Un message d'identification envoyé par la balise radio 14 et reçu par le smartphone 12 est donc identifiable uniquement si l'interface de programmation 20 du serveur central 18 a communiqué au préalable à au moins une application installée sur le smartphone 12 ce message d'identification.

Ceci permet d'éviter que les messages d'identification de la balise radio ne soient décodés par n'importe quel utilisateur et donc que cette balise radio ne soit utilisée par n'importe quel utilisateur.

Lorsqu'un message d'identification envoyé par la balise radio 14 est reçu par le smartphone 12 et reconnu, l'application peut notifier à l'utilisateur des données relatives à la balise radio 14.

Ces données peuvent comprendre une image, une vidéo, un son, une application, des informations pratiques, un lien vers une page de paiement en ligne, etc.

L'invention propose donc système de communication qui permet de contrôler l'accès à la balise radio et de mesurer l'utilisation de cette balise radio.

En outre, l'utilisation d'un Beacon et du Bluetooth basse consommation (BLE) permet de mettre en oeuvre un système simple, rapide, robuste, peu coûteux, qui consomme peu d'énergie et qui est compatible avec une majorité de dispositifs électroniques personnels.

## Revendications

1. Système de communication (10), **caractérisé en ce qu'**il comprend :
- une balise radio (14) adaptée pour envoyer des messages d'identification à un dispositif électronique personnel (12) d'un utilisateur ; et
- une unité de contrôle (16) adaptée pour commander la balise radio et modifier à des intervalles de temps prédéterminés, les messages d'identification envoyés par la balise radio.

2. Système de communication (10) selon la revendication 1, dans lequel l'unité de contrôle (16) est adaptée pour modifier toutes les 24h, les messages d'identification envoyés par la balise radio (14).

3. Système de communication (10) selon la revendication 1 ou 2, comprenant en outre un serveur central (18) adapté pour communiquer avec le dispositif électronique personnel (12) pour identifier les messages d'identification envoyés par la balise radio (14) et reçus par le dispositif électronique personnel.

4. Système de communication (10) selon les revendications 2 et 3, dans lequel le serveur central (18) est adapté pour communiquer avec le dispositif électronique personnel (12) toutes les 24h.

5. Système de communication (10) selon l'une quelconque des revendications 1 à 4, dans lequel la balise radio (14) est adaptée pour envoyer les messages d'identification de sa propre initiative.

6. Système de communication (10) selon l'une quelconque des revendications 1 à 5, dans lequel la balise radio (14) est une balise Bluetooth basse consommation.

7. Système de communication (10) selon l'une quelconque des revendications 1 à 6, dans lequel la balise radio (14) présente une portée inférieure ou égale à 60 m.

8. Procédé de communication, **caractérisé en ce qu'**il comprend les étapes suivantes :
- fournir un système de communication (10) selon l'une quelconque des revendications 1 à 7 et un dispositif électronique personnel (12) d'un utilisateur ;
- envoyer des messages d'identification au dispositif électronique personnel ; et
- modifier à des intervalles de temps prédéterminés, les messages d'identification envoyés par la balise radio (14).

9. Procédé selon la revendication 8, dans lequel on modifie toutes les 24h, les messages d'identification envoyés par la balise radio (14).

10. Procédé selon la revendication 8 ou 9, dans lequel on communique les messages d'identification au dispositif électronique personnel (12) pour identifier lesdits messages d'identification après que lesdits messages d'identification ont été reçus par le dispositif électronique personnel.

11. Procédé selon les revendications 9 et 10, dans lequel on communique les messages d'identification au dispositif électronique personnel (12) toutes les 24h.

12. Procédé selon la revendication 10 ou 11, dans lequel les messages d'identification sont communiqués par une interface de programmation (20) d'un serveur central (18) à au moins une application installée sur le dispositif électronique personnel (12).

13. Procédé selon l'une quelconque des revendications 10 à 12, dans lequel la communication des messages d'identification est sécurisée par un identifiant et un mot de passe.

14. Procédé selon l'une quelconque des revendications 10 à 13, comprenant en outre une étape de notification au cours de laquelle, après qu'un message d'identification a été reçu par le dispositif électronique personnel (12) et identifié, on notifie au dispositif électronique personnel des données relatives à la balise radio (14).

15. Procédé selon l'une quelconque des revendications 8 à 14, dans lequel le dispositif électronique personnel (12) est choisi parmi un smartphone, un smartpad, une smartwatch et un assistant numérique personnel.
